# FASCICULE DE BREVET EUROPEEN

(11) **EP 1 841 584 B1**
(45) Date de publication et mention de la délivrance du brevet: **22.07.2009**
(21) Numéro de dépôt: 05822946.9
(22) Date de dépôt: 24.11.2005
(51) Int. Cl.: B29C 45/14, B29C 43/18, B29C 43/20, B60R 13/02

(54) **PROCEDE DE FABRICATION D'UNE PIECE MULTICOUCHE AVEC UNE ZONE LOCALE SOUPLE, DESTINEE PAR EXEMPLE A SERVIR D'HABILLAGE INTERIEUR POUR UN VEHICULE AUTOMOBILE**
VERFAHREN ZUR HERSTELLUNG EINES MEHRSCHICHTIGEN TEILS MIT FLEXIBLEM LOKALEM BEREICH, Z.B. ZUR VERWENDUNG ALS INNENAUSSTATTUNG FÜR EIN KRAFTFAHRZEUG
METHOD FOR MAKING A MULTILAYER PART WITH A FLEXIBLE LOCAL ZONE, DESIGNED FOR EXAMPLE TO BE USED AS INTERIOR FITTING FOR A MOTOR VEHICLE

(30) Priorité: 29.11.2004 FR 0412631
(43) Date de publication de la demande: 10.10.2007
(73) Titulaire: MÖLLERTECH SAS, 91370 Verrières le Buisson (FR)
(72) Inventeur: FANTIN, Claude, F-36000 Châteauroux (FR); TIRLEMONT, Christophe, F-36330 Le Poinconnet (FR)
(74) Mandataire: Berger, Helmut
(86) Numéro de dépôt international: PCT/FR2005/002919
(87) Numéro de publication internationale: WO 2006/056691

(56) Documents cités:
- EP-A- 0 727 301
- FR-A- 2 850 898
- US-A- 5 626 382
- US-B1- 6 248 200

## Description

L'invention concerne en général un procédé en vue de réaliser une pièce multicouche possédant une zone locale souple pour des habillages intérieurs de véhicules automobiles conformément à la revendication 1.

Plus précisément, la présente invention concerne un procédé de fabrication d'une pièce multicouche, destinée par exemple à servir d'habillage intérieur pour un véhicule automobile, cette pièce comprenant une couche d'aspect, une couche rigide de support fixée sous la couche d'aspect, et au moins un pavé souple interposé localement entre la couche d'aspect et la couche de support.

Dans le domaine de l'habillage intérieur de véhicules automobiles, on connaît déjà des procédés permettant de réaliser de telles pièces.

Un premier exemple de procédé consiste, dans une première étape, à réaliser un insert ou support par une technique d'injection ou de compression à partir d'un matériau composite, dans une étape ultérieure à coller un pavé de mousse sur la couche de support, et enfin à procéder au garnissage de la pièce à l'aide de la couche d'aspect. Ce procédé présente, l'inconvénient de comporter plusieurs étapes de fabrication et de nécessiter la mise en oeuvre de plusieurs outillages (voir par exemple le document US5626382 qui divulgue un procédé selon le préambule de la revendication 1). D'autre part, ce procédé nécessite l'usage de colle qui peut entraîner des problèmes de pollution et des risques de non qualité.

Le brevet EP0727301 décrit un second procédé de ce type, qui consiste à glisser entre la couche d'aspect et le support un pavé en biseau, puis à solidariser la couche d'aspect et le support par pressage. L'avantage de ce procédé est de réaliser la pièce en une seule étape. Néanmoins, il apparaît difficile de positionner précisément le pavé dans le moule de pressage car celui-ci n'est pas fixé au décor ou au support. Il risque donc de ne pas être bien indexé par rapport aux concavités du moule et de créer un défaut d'aspect sur la pièce finale. Par ailleurs, ce procédé ne peut pas être adapté pour réaliser le support par injection de matière thermoplastique fondue sous la couche d'aspect.

Le brevet EP1287961 décrit un troisième exemple de procédé de ce type, consistant à coller un pavé d'épaisseur constante directement sur une couche d'aspect composée d'un décor extérieur et d'une mousse thermoplastique avant de réaliser le pressage sur une couche de support constituée d'un matériau composite ramolli. Le pavé de mousse ne crée pas de défaut visible du côté extérieur de la pièce du fait que les mousses du pavé et de la couche d'aspect fusionnent grâce la chaleur apportée par la couche de support, et du fait de la modification du poinçon utilisé pour le pressage. L'intérêt est de travailler en une seule étape voire deux étapes. De plus, le procédé n'est utilisable que pour des pavés constitués de mousses thermoplastiques et nécessite la modification du poinçon. Ici aussi, le procédé ne peut pas facilement être adapté pour constituer le support par injection de matière thermoplastique fondue sous la couche d'aspect.

Le but de l'invention est de proposer un procédé de fabrication qui pallie les inconvénients cités ci-dessus et qui permette de réaliser la couche de support en introduisant dans le moule la matière constituant ce support sous forme fondue.

A cette fin, la solution consiste en un procédé selon la revendication 1.

Selon un autre aspect de l'invention particulièrement avantageux, la couche d'aspect peut comprendre un revêtement d'aspect et une couche de mousse fixée sous le revêtement d'aspect.

Dans ce cas, la couche de mousse peut être une mousse polyuréthane ou polyoléfine.

De plus, la couche d'aspect peut comprendre une couche d'envers technique fixée sous la couche de mousse.

Alternativement, la couche d'aspect peut comprendre seulement un revêtement d'aspect et une couche d'envers technique fixée sous le revêtement d'aspect.

Avantageusement, l'envers technique de la couche d'aspect peut être un non tissé ou une doublure polyester, polyamide
ou polypropylène ou un mélange de 2 ou 3 de ces matières.

Selon un autre aspect de l'invention, le pavé souple peut être obtenu par moulage d'une mousse de polyuréthane ou de polypropylène expansée, le profil effilé du bord périphérique étant obtenu directement lors du moulage du pavé.

Alternativement, le pavé souple est en mousse polyoléfine
ou polyuréthane soudable.

Dans ce cas, le pavé souple peut être obtenu par découpe d'une plaque de mousse, la mise en forme du bord périphérique étant réalisée par chauffage et pressage du pavé souple après découpe.

Selon encore un autre aspect de l'invention, le pavé souple peut être fixé sous la couche d'aspect avant la mise en forme de son bord périphérique.

Alternativement, la fixation du pavé souple sous la couche d'aspect et la mise en forme de son bord périphérique peuvent être réalisées simultanément.

Selon encore un autre aspect de l'invention, la fixation du pavé souple sous la couche d'aspect peut être réalisée par collage chimique ou thermique.

Avantageusement, l'assemblage du pavé sous la couche d'aspect peut être réalisé sur un moyen permettant de localiser précisément la zone de collage et la couche d'aspect munie du pavé souple peut être positionnée sur la matrice de telle façon que le pavé corresponde à la zone souhaitée sur la pièce finale.

Selon encore un autre aspect de l'invention, l'étape d) peut être réalisée par injection sous pression de la matière thermoplastique à travers le poinçon, après fermeture de l'outil de moulage.

Alternativement, l'étape d) peut être réalisée en ouvrant l'outil de moulage, en déposant une quantité déterminée de matière thermoplastique dans la cavité, en fermant l'outil et en comprimant la matière thermoplastique dans la cavité.

De préférence, le poinçon et la matrice peuvent être montés sur une presse verticale ou horizontale.

Selon encore un autre aspect de l'invention, le pavé souple peut présenter une grande face supérieure relativement plus grande collée sur la face inférieure de la couche d'aspect, une grande face inférieure relativement moins grande opposée à la grande face supérieure, le bord périphérique réunissant les deux grandes faces, le pavé présentant entre ces deux grandes faces une épaisseur faible au regard de la taille des deux grandes faces.

Avantageusement, le bord périphérique peut s'abaisser vers l'extérieur du pavé et vers la grande face supérieure à partir de la grande face inférieure, ce bord formant ainsi un angle obtus avec la face inférieure de la couche d'aspect et offrant une faible résistance à l'étalement de la matière thermoplastique fondue.

Dans ce but, le bord périphérique peut présenter un profil biseauté ou arrondi.

Enfin, on notera que la cavité de l'outil de moulage peut présenter entre le poinçon et l'empreinte une épaisseur sensiblement uniforme, identique dans la zone du pavé et dans les autres zones.

D'autres caractéristiques et avantages de l'invention ressortiront clairement de la description qui en est faite ci-dessous, à titre indicatif et nullement limitatif, en référence aux figures annexées, parmi lesquelles :
Fig 1 : la figure décrit, en vue de coupe, des exemples de couches d'aspects (1) de structures différentes,
Fig 2 : la figure décrit, en vue de coupe, un exemple de pièce (5) obtenu selon le procédé de fabrication de l'invention,
Fig 3 : la figure 3 illustre deux types de profil du bord périphérique (9, 10) du pavé souple (7) utilisé pour produire la pièce de la figure 2,
Fig 4a et 4 b : les figures 4a et 4b décrivent un principe d'assemblage du pavé souple (7) de la figure 3 sur la couche d'aspect (1),
Fig 5 : la figure 5 est une vue en coupe de l'outil de moulage (17) ouvert, la couche d'aspect des figures 4a et 4b étant mis en place dans l'outil, et
Fig 6 : la figure 6 est une vue en coupe de l'outil (17) de la figure 5, fermé, après formation de la couche de support (8).

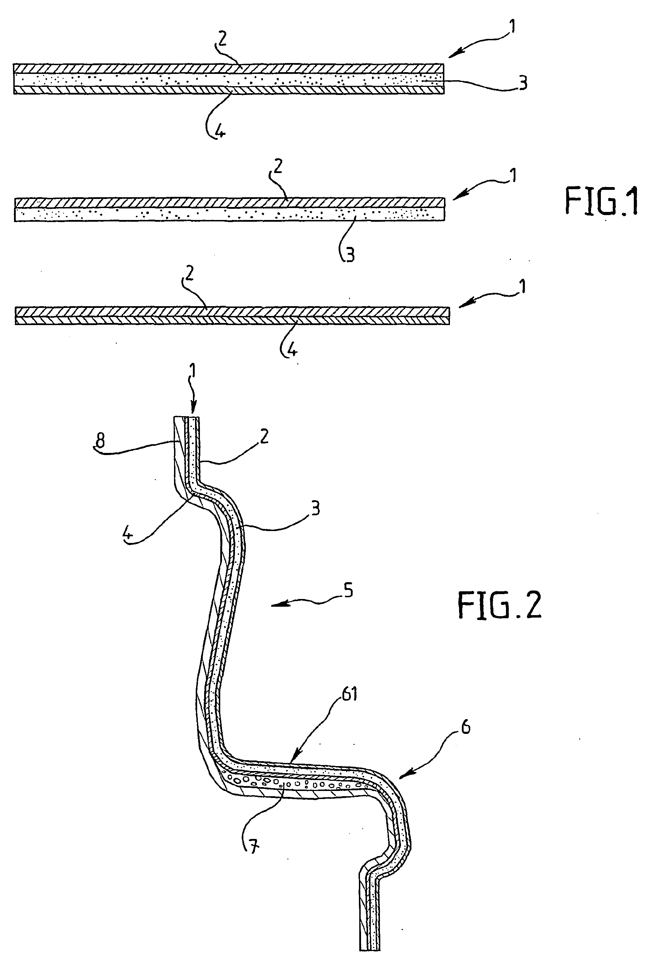

Le procédé de l'invention vise à obtenir une pièce (5), illustrée sur la figure 2, comprenant une couche d'aspect (1), une couche rigide de support (8) fixée sous la couche d'aspect et doublant celle-ci sur pratiquement toute sa surface, et au moins un pavé souple (7) interposé localement entre la couche d'aspect (1) et la couche de support (8).

Dans cet exemple de réalisation, l'objet représenté (5) est un garnissage de panneau de porte comprenant un accoudoir (6). On souhaite conférer un confort et une souplesse supplémentaire localement à la surface (61) destinée à recevoir le coude du passager du véhicule.

La figure 1 montre différents types de couches d'aspects (1) destinées à être utilisées dans le procédé.

La couche d'aspect (1) peut comprendre trois couches, un revêtement d'aspect (2), une couche de mousse (3) doublant le revêtement d'aspect (2) et fixée sous celui-ci, et enfin une couche d'envers technique (4) doublant la couche de mousse (3) et fixée sous celle-ci.

La couche d'aspect (1) peut également ne comprendre que deux couches : le revêtement d'aspect (2) et la couche de mousse (3), ou le revêtement d'aspect (2) et la couche d'envers technique (4).

Le revêtement d'aspect (2) peut être un tissu, un velours, une feuille de vinyle ou de polyoléfine.

La mousse de la couche (3) peut être une mousse polyuréthane ou polyoléfine.

L'envers technique (4) peut être un tricot ou un non tissé, en polyester, en polyamide ou polypropylène ou un mélange de 2 ou 3 de ces matières.

La couche de mousse (3) présente une épaisseur constante et donne un confort général à la pièce. On peut ajouter un envers technique (4) qui sert de protection pour la couche de mousse (3) lors de la formation du support (8).

Par ailleurs, le pavé souple (7) est destiné à s'étendre le long de toute la surface (61). L'épaisseur totale de la couche de mousse et du pavé confère à la pièce un confort supplémentaire dans la zone requise, en l'occurrence dans cet exemple sur la surface (61) de l'accoudoir (6).

Selon l'invention, le procédé comprend les étapes suivantes :
a) on met en forme un bord périphérique (9, 10) du pavé souple (7) en conférant à ce bord un profil effilé, afin d'assurer une continuité de forme à l'objet,
b) on fixe le pavé souple (7) sur une face inférieure de la couche d'aspect à une position prédéterminée,
c) on dispose la couche d'aspect et le pavé souple (7) dans un outil de moulage (17) muni d'un poinçon (18) et d'une matrice (19) définissant entre eux une cavité,
d) on apporte une matière thermoplastique fondue dans la cavité, sous la face inférieure de la couche d'aspect, et on exerce une pression sur cette matière pour qu'elle se répartisse sur la face inférieure,
e) après refroidissement de l'ensemble, on ouvre l'outillage et on extrait la pièce multicouche (5).

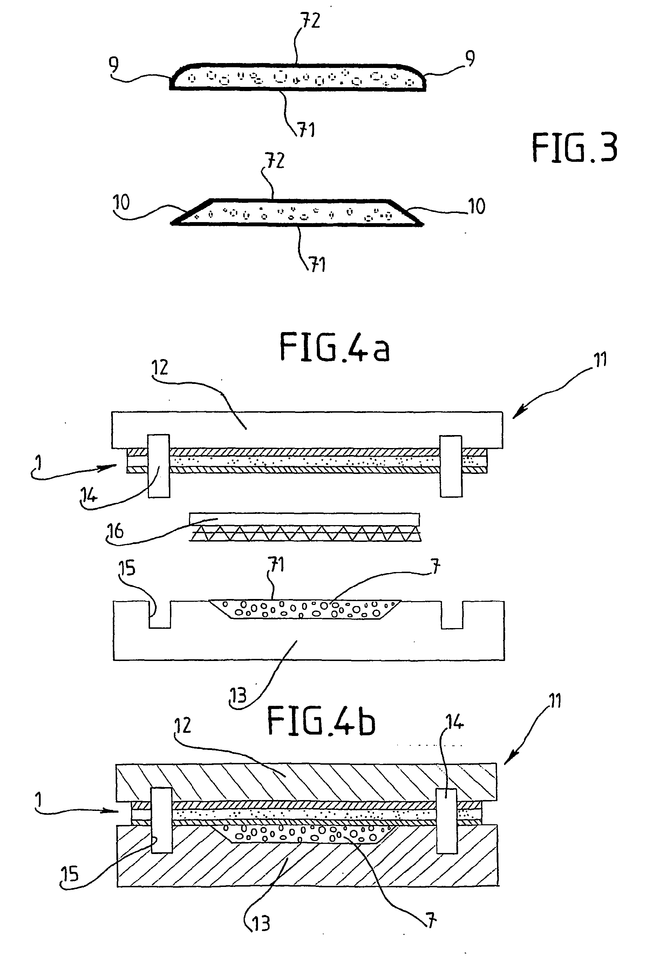

On voit sur la figure 3 que le pavé souple (7), avant insertion entre la couche d'aspect et la couche de support c'est-à-dire à l'état non contraint, est une pièce mince, qui présente une grande face supérieure (71) relativement plus grande collée sur la face inférieure de la couche d'aspect (1), une grande face inférieure (72) relativement moins grande opposée à la grande face supérieure (71), le bord périphérique (9, 10) réunissant les deux grandes faces (71, 72), le pavé présentant entre ces deux grandes faces une épaisseur faible au regard de la taille des deux grandes faces.

Les deux grandes face (71, 72) sont généralement planes et mutuellement parallèles.

Une fois le pavé (7) collé sur la face inférieure de la couche d'aspect (1), c'est-à-dire dans la situation de la figure (5), le bord périphérique (9, 10) s'abaisse vers l'extérieur du pavé (7) et vers la grande face supérieure (71) à partir de la grande face inférieure (72), ce bord formant ainsi un angle obtus avec la face inférieure de la couche d'aspect et offrant une faible résistance à l'étalement de la matière thermoplastique fondue à l'étape d) du procédé.

Comme le montre la figure 3, le bord périphérique (9) peut présenter un profil biseauté et former une surface sensiblement plane raccordant les deux grandes faces du pavé.

Le bord périphérique (10) peut également présenter un profil arrondi, convexe vers l'extérieur du pavé (7).

Ces formes du bord périphérique du pavé (7) permettent d'assurer que le pavé de mousse (7) ne crée pas de surépaisseur ou relief ou ligne après moulage, sur la face visible de l'objet (5) c'est-à-dire sur la couche d'aspect (1) de la pièce. Ces reliefs sont dus à la rémanence du matériau constituant le pavé. Pour ne pas créer de tels reliefs, le bord périphérique du pavé souple (7) ne doit pas être perpendiculaire aux deux grandes faces (71, 72) du pavé (7) avant moulage.

Pour obtenir ce type de profil, on peut produire le pavé par moulage ou coulée dans un moule pourvu d'un poinçon et d'une matrice définissant une cavité de la géométrie du pavé (figue non représentée). Le profil effilé du bord périphérique (9, 10) étant obtenu directement lors du moulage du pavé. Le pavé dans ce cas peut être constitué de polyuréthane souple ou de polypropylène expansé.

Selon une autre possibilité, le pavé est souple (7) est obtenu par découpe d'une plaque de mousse. La mise en forme du bord périphérie (9 ,10) est réalisée par chauffage et pressage du pavé souple (7) dans un outillage adapté après découpe. Dans ce cas, le pavé (7) est constitué d'une mousse thermoplastique du type polyoléfine qui se ramolisse par l'apport de chaleur ou d'une mousse de polyuréthane soudable qui adopte la forme souhaitée par pressage.

Il est envisageable de réaliser la découpe, le chauffage et la formation des bords simultanément.

Il est également possible de fixer le pavé souple (7) sous la couche d'aspect avant la mise en forme de son bord périphérique (9,10).

Grâce à la forme du bord périphérique (9,10) du pavé souple (7), à la précision de son positionnement sur la couche d'aspect (1), et à la précision de son positionnement dans l'outil de moulage (17), on masque l'apport de ce pavé sans générer des défauts d'alignement, de relief, de marquage.

Pour cette étape supplémentaire de préparation du bord du pavé (7), il est à noter qu'il n'existe pas de contraintes particulières au niveau du choix des matières.

Les figures 4a et 4b illustrent l'étape b) d'assemblage de la couche d'aspect (1) et du pavé souple (7) à l'aide d'un outillage (11). La couche d'aspect (1) est fixée avec précision sur un outillage supérieur (12) à l'aide de broches (14). Le pavé de mousse (7) est disposé dans un logement ménagé sur un outillage inférieur (13), la grande face inférieure (72) étant disposée au fond du logement et la grande face supérieure (71) restant exposée. L'outillage inférieur (12) peut être muni de colonnes de guidage, constituées ici par les broches (14), coulissant dans des alésages (15) de l'outillage inférieur (13) afin d'indexer le positionnement de la couche d'aspect (1) celui-ci du pavé souple (7). Un outil de chauffage (16) est disposé temporairement en regard de la grande face supérieure (71) afin de ramollir celle-ci et de la rendre collante. Une autre solution consiste à apporter sur la grande face supérieure (71) un film ou un voile thermoplastique rendu thermocollant après l'opération de chauffage. L'opération de chauffage et ramollissement peut être réaliser par infra rouge, air chaud, flamme ou par contact avec un plateau chauffant. Après cette opération, les outillages (12 et 13) sont refermés rapidement afin de mettre en pression la couche d'aspect (1) sur la grande face supérieure du pavé de mousse (7) et coller celui-ci sur la couche d'aspect (1).

Il est possible dans cette étape de conjuguer la découpe du pavé de mousse (7), la mise en forme du bord (9, 10) et l'assemblage du pavé (7) sur la couche d'aspect (1).

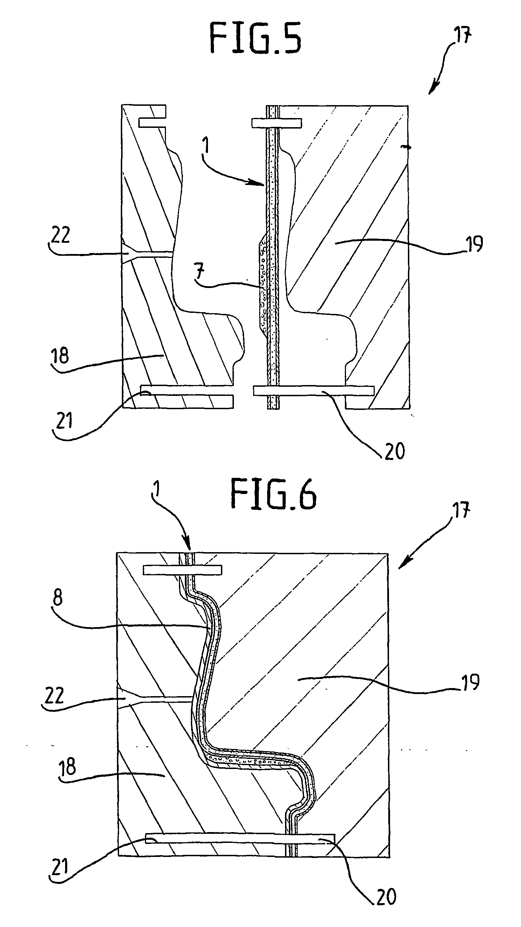

La figure 5 illustre un exemple d'outil de moulage (17) adapté pour réaliser l'étape d) du procédé. Cet outil (17) est représenté ouvert et comprend une matrice (19) et un poinçon (18) mobiles l'un par rapport à l'autre et définissant entre eux une cavité dans l'état fermé de l'outil. Cette cavité définit la forme de la pièce (5) à fabriquer. Le poinçon (18) comprend une ouverture (22) afin d'injecter une matière thermoplastique fondue dans la cavité.

On dispose la couche d'aspect (1) muni du pavé souple (7) sur des broches (20) disposées en périphérie, ces broches permettant de localiser précisément l'ensemble (1 et 7).

On referme ensuite l'outil de moulage en rapprochant mutuellement la matrice (19) et le poinçon (18), comme le montre la figure 6, et on injecte sous forte pression comprise entre 30 à 120 bars une matière thermoplastique fondue dans la cavité, sous la face inférieure de la couche d'aspect (1). Cette matière remplit l'espace libre de la cavité, et se répartit sous la face inférieure de la couche d'aspect (1) et sous la grande face inférieure (72) du pavé souple (7) pour constituer la couche de support (8). On voit sur la figure 6 que les broches (20) constituent des colonnes de guidage du poinçon et de la matrice l'un vers l'autre, et viennent s'engager dans des alésages (21) ménagés dans le poinçon (18), ce qui permet d'indexer le positionnement de la couche d'aspect (1) dans la cavité.

Il est à noter que du fait du profil effilé du bord périphérique (9, 10) du pavé (7), ce bord ne constitue pas un obstacle pour le thermoplastique fondu et guide le thermoplastique pour que celui-ci se répande entre la grande face inférieure (72) du pavé et le poinçon (18), comme le montre la figure 6. Le thermoplastique ne s'immisce pas entre la grande face supérieure (71) et la face inférieure de la couche d'aspect (1). Si le bord périphérique (9, 10) du pavé (7) était droit, c'est-à-dire sensiblement perpendiculaire aux deux grandes faces du pavé et à la face inférieure de la couche d'aspect, ce bord constituerait un obstacle pour le thermoplastique, qui aurait alors tendance à s'immiscer entre la grande face supérieure (71) et la face inférieure de la couche d'aspect (1).

Par ailleurs, du fait que le pavé (7) est collé sous la couche d'aspect (1), le thermoplastique en se répandant ne déplace pas le pavé (7), celui-ci restant à sa position initiale prédéterminée. On peut ainsi positionner très précisément le pavé (7) dans l'outil de moulage (17).

Il est à noter que le pavé souple est placé sur la couche d'aspect avant toute déformation et que, dans le moule, c'est sous l'effet de la matière thermoplastique fondue que la couche d'aspect et le pavé sont déformés du fait que la couche d'aspect est plaquée contre la paroi de la matrice.

Après refroidissement du thermoplastique permettant d'obtenir la rigidité nécessaire de la couche de support (8), la pièce (5) est extraite de l'outil (17) après ouverture de celui-ci. La pièce finale (5) munie de son décor présente la structure et la géométrie requise pour remplir sa fonction de pièce de garnissage et répondre aux cahiers des charges correspondants.

Dans le cas présent, l'outil (17) représenté est un outil d'injection (1) mais on peut également mettre en oeuvre le procédé de fabrication sur un outil de compression, dont le poinçon est dépourvu d'orifice d'injection (22). L'étape d) est réalisée dans ce cas en disposant une quantité déterminée de matière thermoplastique fondue sur le poinçon (18), l'outil de moulage (17) étant ouvert. On referme ensuite l'outil (17) et on sollicite le poinçon et l'empreinte l'un contre l'autre avec une forte pression pour répartir la matière thermoplastique sous la couche d'aspect et le pavé.

En terme de technologie, le poinçon (18) et la matrice (19) peuvent être montés sur une presse verticale ou horizontale.

Enfin, on notera que la cavité présente une épaisseur uniforme entre le poinçon (18) et la matrice (19) et ne présente pas de surépaisseur dans la zone occupée par le pavé (17). L'épaisseur est sensiblement identique dans la zone du pavé (7) et dans les autres zones de la cavité. Le même outil de moulage (17) peut donc servir à produire des pièces (5) de même forme finale, avec un pavé souple (7) et sans pavé souple (7).

Quand la pièce (5) comprend un pavé de mousse, elle va s'expanser d'un côté extérieur, c'est-à-dire du côté de la couche d'aspect, après sortie de l'outil de moulage (17).

L'utilisation d'une cavité d'épaisseur uniforme est rendue possible du fait que l'injection (ou la compression) de la matière thermoplastique fondue est réalisée sous forte pression et que le bord périphérique (9, 10) du pavé possède un profil effilé.

On notera que le fait de constituer la couche de support (8) par injection à travers le poinçon de l'outil de moulage permet de raccourcir le temps de cycle, ce qui est particulièrement avantageux. Toutefois, dans une variante de réalisation non préférée, il est possible de constituer la couche de support (8) en introduisant dans l'outil de moulage (17) une plaque de matériau composite préalablement ramolie par chauffage.

Concernant la nature du dispositif et de la couche d'aspect, le pavé souple peut être composé d'une ou plusieurs couches, avec des matériaux de nature différente ou de dureté différente tels que mousse de polyoléfine ou mousse de polyuréthane à cellules ouvertes et/ou fermées et la couche d'aspect comprend un revêtement d'aspect pouvant être de nature et structure différentes telles que chaîne et trame, velours, tricots, Alcantara, textile enduit plastifié type polychlorure de vinyl ou polyuréthane, feuille polyoléfine.

Dans cet exposé, nous avons décrit le procédé en mentionnant l'insertion d'un seul pavé souple (7), mais il est bien entendu envisageable de déposer plusieurs pavés souples conformément à cette invention.

## Revendications

1. Procédé de fabrication d'une pièce multicouche (5), destinée par exemple à servir d'habillage intérieur pour un véhicule automobile, cette pièce comprenant une couche d'aspect (1), une couche rigide de support (8) fixée sous la couche d'aspect (1), et au moins un pavé souple (7) interposé localement entre la couche d'aspect (1) et la couche de support (8), **caractérisé en ce que** le procédé comprend les étapes suivantes :
a) on met en forme un bord périphérique (9, 10) du pavé souple (7) en conférant à ce bord un profil effilé, afin d'assurer une continuité de forme à l'objet,
b) on fixe le pavé souple (7) sur une face inférieure de la couche d'aspect (1) à une position prédéterminée, avant leur déformation,
c) on dispose la couche d'aspect (1) et le pavé souple (7) dans un outil de moulage (17) muni d'un poinçon (18) et d'une matrice (19) définissant entre eux une cavité,
d) on apporte une matière thermoplastique fondue dans la cavité, sous la face inférieure de la couche d'aspect (1), et on exerce une pression sur cette matière pour qu'elle se répartisse sur la face inférieure de façon que la couche d'aspect et le pavé soient déformés sous l'effet de la matière thermoplastique,
e) après refroidissement de l'ensemble, on ouvre l'outil de moulage et on extrait la pièce multicouche (5).

2. Procédé selon revendication 1, **caractérisé en ce que** la couche d'aspect (1) comprend un revêtement d'aspect (2) et une couche de mousse (3) fixée sous le revêtement d'aspect (2).

3. Procédé selon revendication 2, **caractérisé en ce que** la couche de mousse (3) est une mousse polyuréthane ou polyoléfine.

4. Procédé selon revendication 2 ou 3, **caractérisé en ce que** la couche d'aspect (1) comprend une couche d'envers technique (4) fixée sous la couche de mousse (3).

5. Procédé selon revendication 1, **caractérisé en ce que** la couche d'aspect (1) comprend un revêtement d'aspect (2) et une couche d'envers technique (4) fixée sous le revêtement d'aspect (2).

6. Procédé selon revendication 4 ou 5, **caractérisé en ce que** l'envers technique (4) de la couche d'aspect (1) est un non tissé ou une doublure polyester, polyamide ou polypropylène ou un mélange de 2 ou 3 de ces matières.

7. Procédé selon l'une quelconque des revendications précédentes, **caractérisé en ce que** le pavé souple (7) est obtenu par moulage d'une mousse de polyuréthane ou de polypropylène expansée, le profil effilé du bord périphérique (9, 10) étant obtenu directement lors du moulage du pavé.

8. Procédé selon l'une quelconque des revendications 1 à 6, **caractérisé en ce que** le pavé souple (7) est en mousse polyoléfine ou polyuréthane soudable.

9. Procédé selon revendication 8, **caractérisé en ce que** le pavé souple (7) est obtenu par découpe d'une plaque de mousse, la mise en forme du bord périphérie (9, 10) étant réalisée par chauffage et pressage du pavé souple (7) après découpe.

10. Procédé selon revendication 9, **caractérisé en ce que** le pavé souple (7) est fixé sous la couche d'aspect (1) avant la mise en forme de son bord périphérique (9,10).

11. Procédé selon revendication 9, **caractérisé en ce que** la fixation du pavé souple (7) sous la couche d'aspect (1) et la mise en forme de son bord périphérique (9, 10) sont réalisées simultanément.

12. Procédé selon l'une quelconque des revendications précédentes, **caractérisé en ce que** la fixation du pavé souple (7) sous la couche d'aspect (1) est réalisée par collage chimique ou thermique.

13. Procédé selon l'une quelconque des revendications précédentes, **caractérisé en ce que** l'assemblage du pavé (7) sous la couche d'aspect (1) est réalisé sur un moyen (11) permettant de localiser précisément la zone de collage.

14. Procédé selon l'une quelconque des revendications précédentes, **caractérisé en ce que** la couche d'aspect (1) munie du pavé souple (7) est positionnée sur la matrice (19) de telle façon que le pavé (7) corresponde à la zone souhaitée sur la pièce finale (5).

15. Procédé selon l'une quelconque des revendications précédentes, **caractérisé en ce que** l'étape d) est réalisée par injection sous pression de la matière thermoplastique à travers le poinçon (18), après fermeture de l'outil de moulage (17).

16. Procédé selon l'une quelconque des revendications 1 à 14, **caractérisé en ce que** l'étape d) est réalisée en ouvrant l'outil de moulage (17), en déposant une quantité déterminée de matière thermoplastique dans la cavité, en fermant l'outil (17) et en comprimant la matière thermoplastique dans la cavité.

17. Procédé selon l'une quelconque des revendications précédentes, **caractérisé en ce que** le poinçon (18) et la matrice (19) sont montés sur une presse verticale ou horizontale.

18. Procédé selon l'une quelconque des revendications précédentes, **caractérisé en ce que** le pavé souple (7) présente une grande face supérieure (71) relativement plus grande collée sur la face inférieure de la couche d'aspect (1), une grande face inférieure (72) relativement moins grande opposée à la grande face supérieure (71), le bord périphérique (9, 10) réunissant les deux grandes faces (71, 72), le pavé présentant entre ces deux grandes faces (71, 72) une épaisseur faible au regard de la taille des deux grandes faces.

19. Procédé selon la revendication 18, **caractérisé en ce que** le bord périphérique (9, 10) s'abaisse vers l'extérieur du pavé (7) et vers la grande face supérieure (71) à partir de la grande face inférieure (72), ce bord formant ainsi un angle obtus avec la face inférieure de la couche d'aspect (1) et offrant une faible résistance à l'étalement de la matière thermoplastique fondue.

20. Procédé selon l'une quelconque des revendications précédentes, **caractérisé en ce que** le bord périphérique (9, 10) présente un profil biseauté ou arrondi.

21. Procédé selon l'une quelconque des revendications précédentes, **caractérisé en ce que** la cavité de l'outil de moulage (17) présente entre le poinçon (18) et l'empreinte (19) une épaisseur sensiblement uniforme, identique dans la zone du pavé (7) et dans les autres zones.

22. Procédé selon l'une des revendications précédentes, **caractérisé en ce que** le pavé souple est composé d'une ou plusieurs couches, avec des matériaux de nature différente ou de dureté différente tels que mousse de polyoléfine ou mousse de polyuréthane à cellules ouvertes et ou fermées.

23. Procédé selon l'une des revendications précédentes, **caractérisé en ce que** la couche d'aspect (1) comprend un revêtement d'aspect (2) pouvant être de nature et structure différentes telles que chaîne et trame, velours, tricots, Alcantara, textile enduit plastifié type polychlorure de vinyl ou polyuréthane, feuille polyoléfine.

## Claims

1. A method for making a multilayer part (5), designed for example to be used as interior fittings for a motor vehicle, said part including a decorative layer (1), a rigid supporting layer (8) attached under the decorative layer (1), and at least one flexible block (7) locally inserted between the decorative layer (1) and the supporting layer (8), **characterized in that** the method comprises the following steps:
a) shaping a peripheral edge (9, 10) of the flexible block (7) by giving this edge a tapered profile, in order to ensure shape continuity of the item,
b) attaching the flexible block (7) to a lower face of the decorative layer (1) in a predetermined position, before deformation thereof,
c) arranging the decorative layer (1) and the flexible block (7) in a molding tool (17) fitted with a punch (18) and a die (19) defining a cavity therebetween,
d) introducing a molten thermoplastic material into the cavity, under the lower face of the decorative layer (1), and applying pressure on the material to make it spread over the lower face so that the decorative layer and the block are deformed by the action of the thermoplastic material,
e) after cooling of the assembly, opening the molding tool and extracting the multilayer part (5).

2. The method according to claim 1, **characterized in that** the decorative layer (1) comprises a decorative coating (2) and a foam layer (3) attached under the decorative coating (2).

3. The method according to claim 2, **characterized in that** the foam layer (3) is a polyurethane or polyolefin foam.

4. The method according to claim 2 or 3,
**characterized in that** the decorative layer (1) comprises a technical back layer (4) attached under the foam layer (3).

5. The method according to claim 1, **characterized in that** the decorative layer (1) comprises a decorative coating (2) and a technical back layer (4) attached under the decorative coating (2).

6. The method according to claim 4 or 5,
**characterized in that** the technical back (4) of the decorative layer (1) a web or back cloth of polyester, polyamide, or polypropylene, or a combination of 2 or 3 of said materials.

7. The method according to any of the preceding claims, **characterized in that** the flexible block (7) is obtained by molding an expanded polyurethane or polypropylene foam, with the tapered profile of the peripheral edge (9, 10) being obtained directly when molding the block.

8. The method according to any of claims 1 to 6, **characterized in that** the flexible block (7) is made of weldable polyolefin or polyurethane foam.

9. The method according to claim 8, **characterized in that** the flexible block (7) is obtained by cutting a slab of foam, with the shaping of the peripheral edge (9, 10) being done by heating and pressing the flexible block (7) after cutting.

10. The method according to claim 9, **characterized in that** the flexible block (7) is attached under the decorative layer (1) before shaping of the peripheral edge (9, 10) thereof.

11. The method according to claim 9, **characterized in that** attaching the flexible block (7) under the decorative layer (1) and shaping the peripheral edge (9, 10) thereof are carried out simultaneously.

12. The method according to any of the preceding claims, **characterized in that** attaching the flexible block (7) under the decorative layer (1) is done by chemical or thermal gluing.

13. The method according to any of the preceding claims, **characterized in that** assembling the block (7) under the decorative layer (1) is done on a means (11) allowing for the gluing area to be located precisely.

14. The method according to any of the preceding claims, **characterized in that** the decorative layer (1) fitted with the flexible block (7) is positioned on the die (19) in such a way that the block (7) corresponds to the desired area on the final part (5).

15. The method according to any of the preceding claims, **characterized in that** step d) is carried out by compression molding the thermoplastic material through the punch (18), after closing the molding tool (17).

16. The method according to any of claims 1 to 14, **characterized in that** step d) is carried out by opening the molding tool (17), placing a determined quantity of thermoplastic material into the cavity, closing the tool (17) and compressing the thermoplastic material in the cavity.

17. The method according to any of the preceding claims, **characterized in that** the punch (18) and the die (19) are mounted on a vertical or horizontal press.

18. The method according to any of the preceding claims, **characterized in that** the flexible block (7) has a relatively larger upper broad side (71) glued to the lower face of the decorative layer (1), a relatively smaller lower broad side (72) opposite the upper broad side (71), with the peripheral edge (9, 10) connecting both broad sides (71, 72), the block having between said two large sides (71, 72) a small thickness with respect to the size of the two broad sides.

19. The method according to claim 18, **characterized in that** the peripheral edge (9, 10) declines outwards of block (7) and towards the upper broad side (71) starting from the lower broad side (72), said edge thus forming an obtuse angle with the lower face of the decorative layer (1) and offering low resistance to spreading of the molten thermoplastic material.

20. The method according to any of the preceding claims, **characterized in that** the peripheral edge (9, 10) has a beveled or rounded profile.

21. The method according to any of the preceding claims, **characterized in that** the cavity of the molding tool (17) has between the punch (18) and the die (19) a substantially uniform thickness, identical in the area of the block (7) and in the other areas.

22. The method according to any of the preceding claims, **characterized in that** the flexible block is composed of one or several layers, with the materials being different in type or hardness, such as open or closed cell polyolefin foam or polyurethane foam.

23. The method according to any of the preceding claims, **characterized in that** the decorative layer (1) comprises an decorative coating (2), which can be different in type and structure, such as warp and weft, pile, knitted fabrics, leatherette, plastic coated textile, such as polyvinyl chloride or polyurethane, polyolefin film.

## Patentansprüche

1. Verfahren zur Herstellung eines mehrschichtigen Teils (5), z.B. zur Verwendung als Innenausstattung für ein Kraftfahrzeug, wobei dieses Teil eine Dekorschicht (1), eine unbiegsame Tragschicht (8), die unter der Dekorschicht (1) befestigt ist, und mindestens einen biegsamen Block (7), der lokal zwischen der Dekorschicht (1) und der Tragschicht (8) eingefügt ist, umfasst, **dadurch gekennzeichnet, dass** das Verfahren folgende Schritte umfasst:
a) Gestalten eines Umfangsrandes (9, 10) des biegsamen Blocks (7), indem diesem Rand ein spitz zulaufendes Profil gegeben wird, um eine Formkontinuität des Gegenstands sicherzustellen,
b) Befestigen des biegsamen Blocks (7) auf einer Unterseite der Dekorschicht (1) in einer vorherbestimmten Position, vor ihrer Verformung,
c) Anordnen der Dekorschicht (1) und des biegsamen Blocks (7) in einer Vergießvorrichtung (17), die mit einem Stempel (18) und einem Gesenk (19) ausgestattet ist, die dazwischen einen Aufnahme definieren,
d) Einbringen eines schmelzflüssigen thermoplastischen Materials in die Aufnahme, unter der Unterseite der Dekorschicht (1), und Anwenden von Druck auf dieses Material, damit es sich auf der Unterseite verteilt, so dass die Dekorschicht und der Block durch die Einwirkung des thermoplastischen Materials verformt werden,
e) nach Abkühlen des Ganzen, Öffnen der Vergießvorrichtung und Herausnehmen des mehrschichtigen Teils (5).

2. Verfahren nach Anspruch 1, **dadurch gekennzeichnet, dass** die Dekorschicht (1) eine Dekorbeschichtung (2) und eine Schaumstoffschicht (3), die unter der Dekorbeschichtung (2) befestigt ist, umfasst.

3. Verfahren nach Anspruch 2, **dadurch gekennzeichnet, dass** die Schaumstoffschicht (3) ein Polyurethan- oder Polyolefinschaumstoff ist.

4. Verfahren nach Anspruch 2 oder 3, **dadurch gekennzeichnet, dass** die Dekorschicht (1) eine technische Rückschicht (4), die unter der Schaumstoffschicht (3) befestigt ist, umfasst.

5. Verfahren nach Anspruch 1, **dadurch gekennzeichnet, dass** die Dekorschicht (1) eine Dekorbeschichtung (2) und eine technische Rückschicht (4), die unter der Dekorbeschichtung (2) befestigt ist, umfasst.

6. Verfahren nach Anspruch 4 oder 5, **dadurch gekennzeichnet, dass** die technische Rückseite (4) der Dekorschicht (1) ein Vlies oder ein Untergewebe aus Polyester, Polyamid oder Polypropylen oder einer Kombination von 2 oder 3 dieser Materialien ist.

7. Verfahren nach einem der vorhergehenden Ansprüche, **dadurch gekennzeichnet, dass** der biegsame Block (7) durch Formen eines geschlossenzelligen Polyurethan- oder Polypropylenschaumstoffs ist, wobei das spitz zulaufende Profil des Umfangsrandes (9, 10) direkt beim Formen des Blocks erzielt wird.

8. Verfahren nach einem der Ansprüche 1 bis 6, **dadurch gekennzeichnet, dass** der biegsame Block (7) aus schweißbarem Polyolefin- oder Polyurethanschaumstoff besteht.

9. Verfahren nach Anspruch 8, **dadurch gekennzeichnet, dass** der biegsame Block (7) durch Ausschneiden einer Schaumstoffplatte erzielt wird, wobei die Gestaltung des Umfangsrandes (9, 10) durch Erhitzen und Verpressen des biegsamen Blocks (7) nach dem Ausschneiden erfolgt.

10. Verfahren nach Anspruch 9, **dadurch gekennzeichnet, dass** der biegsame Block (7) unter der Dekorschicht (1) befestigt wird, bevor sein Umfangsrand (9, 10) gestaltet wird.

11. Verfahren nach Anspruch 9, **dadurch gekennzeichnet, dass** die Befestigung des biegsamen Blocks (7) unter der Dekorschicht (1) und das Gestalten seines Umfangsrandes (9, 10) gleichzeitig ausgeführt werden.

12. Verfahren nach einem der vorhergehenden Ansprüche, **dadurch gekennzeichnet, dass** die Befestigung des biegsamen Blocks (7) unter der Dekorschicht (1) durch chemisches oder thermisches Kleben erfolgt.

13. Verfahren nach einem der vorhergehenden Ansprüche, **dadurch gekennzeichnet, dass** das Zusammenfügen des Blocks (7) unter der Dekorschicht (1) auf einem Mittel (11) erfolgt, dass das eine genaue Positionierung des Klebebereichs ermöglicht.

14. Verfahren nach einem der vorhergehenden Ansprüche, **dadurch gekennzeichnet, dass** die mit dem biegsamen Block (7) ausgestattete Dekorschicht (1) derart auf dem Gesenk (19) angeordnet wird, dass der Block (7) dem gewünschten Bereich auf dem endgültigen Teil (5) entspricht.

15. Verfahren nach einem der vorhergehenden Ansprüche, **dadurch gekennzeichnet, dass** Schritt d) durch Druckeinspritzung des thermoplastischen Materials durch den Stempel (18) hindurch erfolgt, nachdem die Vergießvorrichtung (17) geschlossen wurde.

16. Verfahren nach einem der Ansprüche 1 bis 14, **dadurch gekennzeichnet, dass** Schritt d) ausgeführt wird durch Öffnen der Vergießvorrichtung (17), Einlegen einer bestimmten Menge von thermoplastischem Material in die Aufnahme, Schließen der Vergießvorrichtung (17) und Verpressen des thermoplastischen Materials in der Aufnahme.

17. Verfahren nach einem der vorhergehenden Ansprüche, **dadurch gekennzeichnet, dass** der Stempel (18) und das Gesenk (19) auf einer senkrechten oder einer waagerechten Presse angebracht sind.

18. Verfahren nach einem der vorhergehenden Ansprüche, **dadurch gekennzeichnet, dass** der biegsame Block (7) eine relativ größere obere Breitseite (71), die auf die untere Seite der Dekorschicht (1) geklebt ist, eine relativ kleinere untere Breitseite (72), die der oberen Breitseite (71) gegenüberliegt, aufweist, wobei der Umfangsrand (9, 10) die beiden Breitseiten (71, 72) verbindet, wobei der Block zwischen diesen beiden Breitseiten (71, 72) eine geringe Dicke im Verhältnis zur Größe der beiden Breitseiten aufweist.

19. Verfahren nach Anspruch 18, **dadurch gekennzeichnet, dass** der Umfangsrand (9, 10) zum Äußern des Blocks (7) und in Richtung auf die obere Breitseite (71) von der unteren Breitseite (72) aus abfällt, wobei dieser Rand somit einen stumpfen Winkel mit der unteren Seite der Dekorschicht (1) bildet und gegen das Verteilen des schmelzflüssigen thermoplastischen Materials wenig Widerstand bietet.

20. Verfahren nach einem der vorhergehenden Ansprüche, **dadurch gekennzeichnet, dass** der Umfangsrand (9, 10) ein abgefastes oder abgerundetes Profil aufweist.

21. Verfahren nach einem der vorhergehenden Ansprüche, **dadurch gekennzeichnet, dass** die Aufnahme der Vergießvorrichtung (17) zwischen dem Stempel (18) und dem Gesenk (19) eine im Wesentlichen einheitliche Dicke aufweist, die in dem Bereich des Blocks (7) und in den anderen Bereichen identisch ist.

22. Verfahren nach einem der vorhergehenden Ansprüche, **dadurch gekennzeichnet, dass** der biegsame Block aus einer oder mehreren Schichten besteht, wobei die Materialien in Art und Härte unterschiedlich sind, wie etwa offen- oder geschlossenzelliger Polyolefinschaumstoff oder Polyurethanschaumstoff.

23. Verfahren nach einem der vorhergehenden Ansprüche, **dadurch gekennzeichnet, dass** die Dekorschicht (1) eine Dekorbeschichtung (2) umfasst, die von anderer Art und Struktur sein kann, wie etwa Kette und Schuss, Faserflor, Strickgewebe, Alcantara, Stoff mit Plastikbezug, wie etwa Polyvinylchlorid oder Polyurethan, Polyolefinfolie.
